# EUROPEAN PATENT SPECIFICATION

(11) **EP 3 901 366 B1**
(45) Date of publication and mention of the grant of the patent: **10.09.2025**
(21) Application number: 19899761.1
(22) Date of filing: 03.12.2019
(51) Int. Cl.: D06N 3/14, C08L 75/04, C08L 83/04, C08G 18/00, C08G 18/48, C08G 18/75, D06N 3/00, C08G 18/08, C08G 18/12, C08G 18/32, C08G 18/34, C08G 18/44, C08G 18/66, C08G 18/73, C08G 18/04

(54) **URETHANE RESIN COMPOSITION, FILM AND SYNTHETIC LEATHER**
URETHANHARZZUSAMMENSETZUNG, FILM UND KUNSTLEDER
COMPOSITION DE RÉSINE URÉTHANE, FILM ET CUIR SYNTHÉTIQUE

(30) Priority: 18.12.2018 JP 2018236366
(43) Date of publication of application: 27.10.2021
(73) Proprietor: DIC Corporation, Tokyo 174-8520 (JP)
(72) Inventor: MAEDA Ryo, Takaishi-shi, Osaka 592-0001 (JP)
(74) Representative: Kraus & Lederer PartGmbB
(86) International application number: PCT/JP2019/047146
(87) International publication number: WO 2020/129604

(56) References cited:
- EP-A1- 2 602 273
- EP-A2- 1 170 416
- WO-A1-2012/017724
- WO-A1-2015/033732
- WO-A1-2019/058692
- JP-A- 2003 138 131
- JP-A- 2004 143 641
- JP-A- 2005 239 841
- JP-A- 2009 007 409
- JP-A- 2010 280 843
- JP-A- 2012 515 811
- JP-A- S5 838 723
- DATABASE WPI Week 201174, Derwent World Patents Index; AN 2011-N53693, XP002805300
- DATABASE WPI Week 200675, Derwent World Patents Index; AN 2006-721777, XP002805301

## Description

### Technical Field

The present invention relates to a urethane resin composition, a coating, and a synthetic leather.

### Background Art

Polyurethane resins have been widely used in the production of synthetic leather (including artificial leather) because of their high mechanical strength and good textures. Solvent-based urethane resins containing N,N-dimethylformamide (DMF) have been mainly used for the production of synthetic leather. However, elimination of the usage of DMF in urethane resins constituting synthetic leather has been demanded against the backdrop of, for example, tightening DMF control in Europe, tightening VOC emission control in China and Taiwan, and tightening DMF control in major apparel companies.

In order to address the above-mentioned change of the times, urethane resin compositions in which a urethane resin is, for example, dispersed in water has been broadly studied (for example, see PTL 1). However, although studies regarding the substitution of the aqueous urethane resin compositions are proceeding, it has been pointed out that the existing aqueous urethane resin compositions are inferior in physical properties, such as hydrolysis resistance, to the solvent-based urethane resin compositions.

Furthermore, also in the fields of sports shoes, functional shoes, moisture-permeable clothing, and the likes, elimination of the usage of DMF is proceeding, however, not only to the above-mentioned physical properties, but also excellent moisture permeability are required, and an aqueous material having all of these functions at high levels has not been devised yet.

### Citation List

### Patent Literature

PTL 1: Japanese Unexamined Patent Application Publication No. 2007-119749

Further relevant background information can be found in documents EP2602273A1, EP1170416A2, WO2011/132581A1, JP2006274096A.

### Summary of Invention

### Technical Problem

An object of the present invention is to provide an aqueous urethane resin composition excellent in the water dispersion stability, moisture permeability, and hydrolysis resistance of a urethane resin.

### Solution to Problem

The present invention provides a urethane resin composition according to claim 1, including: a urethane resin (X) having an anionic group, a silicone compound (Z), which is a silicone emulsion and is used in the amount of 0.1 to 10 parts by mass with respect to 100 parts by mass of the urethane resin (X) in terms of solid contents, water (Y), the urethane resin (X) having a concentration of the anionic group of 0.2 mmol/g or less, and having a concentration of a structure represented by the following formula (1) of 1 to 6 mmol/g.

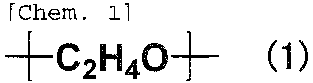

The present invention also provides a coating formed from the urethane resin composition, and a synthetic leather including the coating as a skin layer.

### Advantageous Effects of Invention

The urethane resin composition according to the present invention includes water and is environmentally friendly and excellent in the water dispersion stability, moisture permeability, and hydrolysis resistance of the urethane resin.

Furthermore, when a specific material is used for the urethane resin composition, higher wear resistance and still higher hydrolysis resistance can be achieved.

Thus, the coating formed from the urethane resin composition according to the present invention has various uses, and in particular, can be used for sports shoes, functional shoes, moisture-permeable clothing, and the likes, in which the substitution of aqueous resin compositions for solvent-based resin compositions has been considered to be difficult.

### Description of Embodiments

A urethane resin composition according to the present invention includes a specific urethane resin (X) having an anionic group and water (Y).

It is essential for achieving excellent hydrolysis resistance that the urethane resin (X) has an anionic group, and that the concentration of the anionic group is 0.2 mmol/g or less. A hydrophilic group such as the anionic group is necessary in order to disperse a urethane resin in water, but acts as a trigger for hydrolysis and the like in a resin skeleton. Therefore, when the concentration of the anionic group is set to 0.2 mmol/g or less, excellent hydrolysis resistance can be achieved, and furthermore, when the anionic group and a nonionic group having a structure represented by formula (1) described later are used in combination, the emulsifiability and water dispersion stability of the urethane resin can be ensured.

From the viewpoint of achieving still higher hydrolysis resistance and water dispersion stability, the concentration of the anionic group in the urethane resin (X) is preferably within a range of 0.01 to 0.2 mmol/g, more preferably within a range of 0.02 to 0.17 mmol/g, and still more preferably within a range of 0.03 to 0.15 mmol/g. Note that the concentration of the anionic group in the urethane resin (X) can be adjusted by the amount of an anionic group-giving compound (d) used and serving as a raw material of the urethane resin (X) described later.

Furthermore, it is essential that the urethane resin (X) has a concentration of the structure represented by the following formula (1) of 1 to 6 mmol/g.

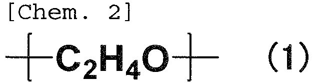

The structure represented by formula (1) also functions as a nonionic group, but, it has been pointed out that the presence of the nonionic group in a large amount can make emulsification particularly difficult. One possible reason for this is that the structure represented by formula (1) is highly hydrophilic, and thus particles are partially dissolved in water to cause the instability of particle formation, which causes gelling. However, in the present invention, the structure of formula (1) is introduced in a specific amount, whereby not only good emulsifiability and water dispersion stability, but also excellent moisture permeability can be achieved.

From the viewpoint of achieving still higher emulsifiability, water dispersion stability, and moisture permeability, the concentration of the structure represented by formula (1) in the urethane resin (X) is preferably within a range of 1.1 to 5 mmol/g, and more preferably within a range of 1.3 to 4.5 mmol/g. Note that the concentration of the structure represented by formula (1) can be adjusted by the amount of polyol (a1) having the structure of formula (1) used. The concentration of the structure represented by formula (1) is calculated, based on the structure (one oxyethylene group) of formula (1).

Specific examples of the urethane resin (X) that can be used include a reaction product of polyol (a) including the polyol (a1) having the structure of formula (1), a chain extender (b), polyisocyanate (c), and the anionic group-giving compound (d).

Examples of the usable polyol (a) including the polyol (a1) having the structure of formula (1) include polyethylene glycol, polyoxyethylene polyoxypropylene glycol (a1-1), and polyoxyethylene polyoxytetramethylene glycol (a1-2). These polyols may be used alone or in combination of two or more. Of these polyols, polyoxyethylene polyoxypropylene glycol (a1-1) and/or polyoxyethylene polyoxytetramethylene glycol (a1-2) are preferably used from the viewpoint of achieving still higher water dispersion stability of the urethane resin (X).

Examples of the polyoxyethylene polyoxypropylene glycol (a1-1) that can be used include: random copolymers obtained by adding a mixture of ethylene oxide and propylene oxide to ethylene glycol or propylene glycol serving as an initiator; and block copolymers, such as an adduct obtained by adding propylene oxide to ethylene glycol or propylene glycol serving as an initiator and then adding ethylene oxide to an end of the resultant, and an adduct obtained by adding ethylene oxide to ethylene glycol or propylene glycol serving as an initiator and then adding propylene oxide to an end of the resultant. These polyols may be used alone or in combination of two or more. Of these polyols, the random polymers are preferably used from the viewpoint of achieving still higher water dispersion stability of the urethane resin (X).

Examples of the polyoxyethylene polyoxytetramethylene glycol (a1-2) that can be used include: random copolymers obtained by adding a mixture of ethylene oxide and tetramethylene oxide to ethylene glycol or tetrahydrofuran serving as an initiator; and block copolymers, such as an adduct obtained by adding tetramethylene oxide to ethylene glycol or tetrahydrofuran serving as an initiator and then adding ethylene oxide to an end of the resultant, and an adduct obtained by adding ethylene oxide to ethylene glycol or tetrahydrofuran serving as an initiator and then adding tetramethylene oxide to an end of the resultant. These polyols may be used alone or in combination of two or more. Of these polyols, the random polymers are preferably used from the viewpoint of achieving still higher water dispersion stability of the urethane resin (X).

From the viewpoint of achieving still higher emulsifiability, water dispersion stability, and moisture permeability, the number average molecular weight of the polyol (a1) having the structure of formula (1) is preferably within a range of 500 to 100,000, more preferably within a range of 700 to 10,000, and still more preferably within a range of 1,000 to 5,000. Note that the number average molecular weight of the polyol (a1) is a value determined by gel permeation chromatography (GPC).

The proportion of the polyol (a1) used is preferably within a range of 1% to 50% by mass and more preferably within a range of 5% to 40% by mass, based on the total mass of raw materials constituting the urethane resin (X).

Besides the polyol (al), other polyols can be used for the polyol (a). Examples of the other polyols that can be used include: polyether polyol, polyester polyol, polycarbonate polyol, polycaprolactone polyol, polyacrylic polyol, and polybutadiene polyol, other than the polyol (a1). These polyols may be used alone or in combination of two or more. From the viewpoint of achieving still higher wear resistance, moisture permeability, and bendability, of these polyols, polyether polyol and/or polycaprolactone polyol, other than the polyol (a1), are preferably used. As polyether polyol other than the polyol (a1), polytetramethylene glycol is more preferably used.

From the viewpoint of the mechanical strength of a urethane coating, the proportion of the entirety of the polyol (a) used is preferably within a range of 1% to 50% by mass, and more preferably within a range of 5% to 40% by mass, based on the total mass of the raw materials constituting the urethane resin (X).

The chain extender (b) has a molecular weight of less than 500, and preferably 50 to 450. Examples of the chain extender (b) that can be used include: chain extenders having a hydroxyl group, such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, 4,4'-dihydroxydiphenylsulfone, hydrogenated bisphenol A, hydroquinone, and water; and chain extenders having an amino group, such as ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, and triethylenetetramine. These chain extenders may be used alone or in combination of two or more.

Of the above-mentioned chain extenders, chain extenders having an amino group are preferably used as the chain extender (b) from the viewpoint of achieving still higher weather resistance and hydrolysis resistance.

From the viewpoint of achieving still higher mechanical strength, the proportion of the chain extender (b) used is preferably within a range of 0.1% to 20% by mass, and more preferably within a range of 1% to 10% by mass, based on the total mass of the raw materials constituting the urethane resin (X).

Examples of the polyisocyanate (c) that can be used include: aliphatic polyisocyanates, such as hexamethylene diisocyanate; alicyclic polyisocyanates, such as cyclohexane diisocyanate, isophorone diisocyanate, dicyclohexylmethane diisocyanate, tetramethylxylylene diisocyanate, and norbornene diisocyanate; and aromatic polyisocyanates, such as phenylene diisocyanate, toluene diisocyanate, diphenylmethane diisocyanate, naphthalene diisocyanate, polymethylene polyphenyl polyisocyanate, and carbodiimidated diphenylmethane polyisocyanate. These polyisocyanates may be used alone or in combination of two or more.

From the viewpoint of achieving still higher wear resistance and hydrolysis resistance, of the above-mentioned polyisocyanates, alicyclic polyisocyanates are preferably used as the polyisocyanate (c), and the proportion of the alicyclic polyisocyanate used in the polyisocyanate (c) is preferably 40 mol% or more and more preferably 60 mol% or more.

Examples of the anionic group-giving compound (d) that can be used include a compound having a carboxyl group and a compound having a sulfonyl group. These compounds may be used alone or in combination of two or more.

Examples of the usable compound having a carboxyl group include 2,2-dimethylolpropionic acid, 2,2-dimethylolbutanoic acid, 2,2-dimethylolbutyric acid, 2,2-dimethylolpropionic acid, and 2,2'-valeric acid. These compounds may be used alone or in combination of two or more.

Examples of the usable compound having a sulfonyl group include: 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, and N-(2-aminoethyl)-β-alanine; and salts thereof. These compounds may be used alone or in combination of two or more.

In the urethane resin composition, part or all of the carboxyl group and the sulfonyl group may be neutralized with a basic compound. Examples of the basic compound that can be used include: organic amines, such as ammonia, triethylamine, pyridine, and morpholine; alkanolamines, such as monoethanolamine and dimethylethanolamine; and metal basic compounds containing sodium, potassium, lithium, or calcium.

From the viewpoint of achieving still higher mechanical strength, the proportion of the anionic group-giving compound (d) used is preferably within a range of 0.1% to 3% by mass, and more preferably within a range of 0.5% to 2.5% by mass, based on the total mass of the raw materials constituting the urethane resin (X).

Examples of a method for producing the urethane resin (X) include: a method in which the polyol (a), the chain extender (b), the polyisocyanate (c), and the anionic group-giving compound (d) are mixed at once and allowed to react; and a method in which the polyol (a), the polyisocyanate (c), and the anionic group-giving compound (d) are allowed to react, thereby obtaining a urethane prepolymer having an isocyanate group, and substantially the urethane prepolymer is allowed to react with the chain extender (b). Of these methods, the latter method is preferably employed from the viewpoint of production stability. Each of the reactions is performed, for example, at a temperature of 50°C to 100°C for 3 to 10 hours.

The molar ratio of isocyanate groups included in the polyisocyanate (c) to the total moles of hydroxyl groups and amino groups included in the polyol (a), the anionic group-giving compound (d), and the chain extender (b) [(the moles of isocyanate groups) / (the total moles of hydroxyl groups and amino groups)] is preferably within a range of 0.8 to 1.2, and more preferably within a range of 0.9 to 1.1.

When the urethane resin (X) is produced, isocyanate groups remaining in the urethane resin (X) are preferably deactivated. To deactivate the isocyanate groups, an alcohol having a hydroxyl group, such as methanol, is preferably used. In the case of using the alcohol, the amount of the alcohol used is, for example, within a range of 0.001 to 10 parts by mass, with respect to 100 parts by mass of the urethane resin (X).

When the urethane resin (X) is produced, an organic solvent may be used. Examples of the organic solvent that can be used include: ketone compounds, such as acetone and methyl ethyl ketone; ether compounds, such as tetrahydrofuran and dioxane; acetate compounds, such as ethyl acetate and butyl acetate; nitrile compounds, such as acetonitrile; and amide compounds, such as dimethylformamide and N-methylpyrrolidone. These organic solvents may be used alone or in combination of two or more. Note that the organic solvent is preferably removed by, for example, a distillation method when the urethane resin composition is obtained.

From the viewpoint of achieving still higher wear resistance, hydrolysis resistance, and mechanical strength, the weight-average molecular weight of the urethane resin (X) is preferably within a range of 50,000 to 500,000, and more preferably within a range of 80,000 to 400,000. Note that the weight-average molecular weight of the urethane resin (X) is a value determined by gel permeation chromatography (GPC).

Examples of the water (Y) that can be used include ion-exchange water and distilled water. From the viewpoints of workability, ease of coating, and preservation stability, the proportion of the water (Y) used in the urethane resin composition is preferably 20% to 90% by mass, and more preferably 30% to 60% by mass.

The urethane resin composition according to the present invention includes the urethane resin (X), a silicone compound (Z), which is silicone emulsion and is used in the composition in the range of 0.1 to 10 parts by mass with respect to 100 parts by mass of the urethane resin (X) in terms of solid contents, and the water (Y), and may further include other additives, if necessary.

Examples of the other additives that can be used include a urethanization catalyst, a cross-linking agent, a silane coupling agent, a thickener, a filler, a thixotropic agent, a tackifier, a wax, a heat stabilizer, a light-resistant stabilizer, a fluorescent whitening agent, a foaming agent, a pigment, a dye, a conductivity imparting agent, an antistatic agent, a moisture permeability improver, a water repellent, an oil repellent, a hollow foam, a flame retardant, a desiccant, a moisture absorbent, a deodorant, a foam stabilizer, an antiblocking agent, and a hydrolysis inhibitor. These additives may be used alone or in a combination of two or more. Of these additives, the silicone compound (Z) is preferably used from the viewpoint of achieving still higher wear resistance.

From the viewpoint of achieving good dispersibility into the urethane resin composition, a silicone emulsion is used as the silicone compound (Z). Examples of the silicone emulsion that can be used include: silicone oil emulsions, such as a dimethyl silicone oil emulsion, an amino group-containing silicone oil emulsion, an epoxy group-containing silicone oil emulsion, a mercapto group-containing silicone oil emulsion, a phenyl group-containing silicone oil emulsion, a long chain alkyl group-containing silicone oil emulsion, a hydrogen group-containing silicone oil emulsion, and a reactive silicone oil emulsion; resin-based emulsions, such as an MQ resin emulsion and a methyl-based silicone resin emulsion; silicone rubber-based emulsions; and silicone powder-based emulsions. These silicone emulsions may be used alone or in combination of two or more. From the viewpoint of further enhancing compatibility with the urethane resin (X) and achieving still higher wear resistance, of these silicone emulsions, silicone oil emulsions are preferably used, and a dimethyl silicone oil emulsion is more preferably used.

Preferable examples of the silicone emulsions that are commercially available include: "WACKER E22", "SILICONE FLUID EMULSION C800", and "SLJ1320" (manufactured by Wacker Asahikasei Silicone Co., Ltd.); and "KM-740T", "KM-862T", and "KM-752T" (manufactured by Shin-Etsu Chemical Co., Ltd).

From the viewpoint of achieving still higher water dispersibility and wear resistance, the amount of the silicone compound (Z) (solid contents) used is within a range of 0.1 to 10 parts by mass, and more preferably within a range of 1 to 9 parts by mass, with respect to 100 parts by mass of the urethane resin (X) (solid contents).

Examples of a method for forming a coating from the urethane resin composition according to the present invention include a method in which the urethane resin composition is applied onto a substrate, and water is dried.

Examples of the substrate that can be used include: fibrous substrates, such as polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, and nonwoven fabrics, woven fabrics, and knitted fabrics made of fiber mixtures thereof or the likes; a substrate produced by impregnating the nonwoven fabrics with a resin, such as a polyurethane resin; a substrate produced by further providing a porous layer in the nonwoven fabrics; and a resin substrate; rubber; glass; wood; and metal.

Examples of a method for applying the urethane resin composition onto the substrate include a method using, for example, a roll coater, a knife coater, a comma coater, or an applicator.

Examples of the method for drying water include a method in which water is dried at a temperature of 60°C to 130°C for 30 seconds to 10 minutes.

The thickness of a urethane resin composition coating obtained by the above-mentioned methods is, for example, within a range of 5 to 1,000 µm.

Next, a synthetic leather according to the present invention will be described.

The synthetic leather according to the present invention includes the urethane resin coating as a skin layer, and examples of the synthetic leather include synthetic leathers having the following structures.

(1) substrate, skin layer
(2) substrate, bonding layer, and skin layer
(3) substrate, bonding layer, intermediate layer, and skin layer
(4) substrate, porous layer, bonding layer, and skin layer
(5) substrate, porous layer, bonding layer, intermediate layer, and skin layer

As a material for each of the bonding layer, the intermediate layer, and the porous layer, a well-known material can be used.

As described above, the urethane resin composition according to the present invention includes water and is environmentally friendly and excellent in the water dispersion stability, moisture permeability, and hydrolysis resistance of a urethane resin. Furthermore, when a specific material is used for the urethane resin composition, higher wear resistance and still higher hydrolysis resistance can be achieved.

Thus, the coating formed from the urethane resin composition according to the present invention has various uses, and in particular, can be used for sports shoes, functional shoes, moisture-permeable clothing, and the likes, in which the substitution of aqueous resin compositions for solvent-based resin compositions has been considered to be difficult.

### Examples

Hereinafter, the present invention will be described in more detail by way of Examples.

### [Example 1] (according to the invention)

A four-neck flask equipped with a stirrer, a reflux condenser tube, a thermometer, and a nitrogen blowing tube was charged, under a nitrogen flow, with 100 parts by mass of polytetramethylene glycol (number average molecular weight: 2,000, hereinafter abbreviated as "PTMG"), 35 parts by mass of a random copolymer of ethylene oxide and propylene oxide (produced using ethylene glycol as an initiator, a molar ratio of a structure represented by formula (1) (hereinafter, abbreviated as "EO") to a structure represented by the following formula (2) (hereinafter, abbreviated as "PO") [EO/PO] = 50/50, number average molecular weight: 1,750, hereinafter abbreviated as "EOPO (1)"), 3 parts by mass of 2,2-dimethylolpropionic acid (hereinafter, abbreviated as "DMPA"), and 121 parts by mass of methyl ethyl ketone (hereinafter, abbreviated as "MEK"). The mixture was stirred until uniform. Then, 36 parts by mass of dicyclohexylmethane diisocyanate (hereinafter, abbreviated as "HMDI") was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 2.3 parts by mass of triethylamine was added to neutralize a carboxyl group in the urethane prepolymer. After the neutralization, 425 parts by mass of ion-exchange water was added, and substantially 7.9 parts by mass of isophoronediamine (hereinafter, abbreviated as "IPDA") was added, and the resultant mixture was allowed to react. After that, methyl ethyl ketone was removed by evaporation under reduced pressure, and then, 9.1 parts by mass of a silicone emulsion ("WACKER E22", manufactured by Wacker Asahikasei Silicone Co., Ltd., solid content: 42% by mass, hereinafter abbreviated as "QEm (1)") was added to obtain a urethane resin composition.

In the obtained urethane resin, the concentration of the anionic group was 0.12 mmol/g and the concentration of EO was 2.18 mmol/g.

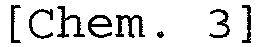

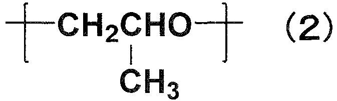

### [Example 2] (according to the invention)

A four-neck flask equipped with a stirrer, a reflux condenser tube, a thermometer, and a nitrogen blowing tube was charged, under a nitrogen flow, with 100 parts by mass of PTMG, 30 parts by mass of polycarbonatediol (produced using 1,6-hexanediol as a base raw material, number average molecular weight: 2,000, hereinafter abbreviated as "PC"), 40 parts by mass of a random copolymer of ethylene oxide and propylene oxide (produced using ethylene glycol as an initiator, [EO/PO] = 75/25, number average molecular weight: 1,400, hereinafter abbreviated as "EOPO (2)"), 3 parts by mass of DMPA, and 149 parts by mass of MEK. The mixture was stirred until uniform. Then, 46 parts by mass of HMDI was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 2.3 parts by mass of triethylamine was added to neutralize a carboxyl group in the urethane polymer. After the neutralization, 522 parts by mass of ion-exchange water was added, and substantially 5 parts by mass of piperazine (hereinafter abbreviated as "PZ") was added, and the resultant mixture was allowed to react. After that, methyl ethyl ketone was removed by evaporation under reduced pressure, and then, 6.7 parts by mass of a silicone emulsion ("SILICONE FLUID EMULSION C800", manufactured by Wacker Asahikasei Silicone Co., Ltd., solid content: 80% by mass, hereinafter abbreviated as "QEm (2)") was added to obtain a urethane resin composition.

In the obtained urethane resin, the concentration of the anionic group was 0.1 mmol/g and the concentration of EO was 3.05 mmol/g.

### [Example 3] (according to the invention)

A four-neck flask equipped with a stirrer, a reflux condenser tube, a thermometer, and a nitrogen blowing tube was charged, under a nitrogen flow, with 100 parts by mass of PTMG, 80 parts by mass of a random copolymer of ethylene oxide and tetramethylene oxide (produced using tetrahydrofuran as an initiator, a molar ratio of EO to a structure represented by the following formula (3) (hereinafter abbreviated as "TMO") [EO/TMO] = 50/50, number average molecular weight: 1,800, hereinafter abbreviated as "EOTMO (1)"), 4 parts by mass of DMPA, and 159 parts by mass of MEK. The mixture was stirred until uniform. Then, 34 parts by mass of HMDI and 9.4 parts by mass of hexamethylene diisocyanate (hereinafter abbreviated as "HDI") were added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 3 parts by mass of triethylamine was added to neutralize a carboxyl group in the urethane polymer. After the neutralization, 556 parts by mass of ion-exchange water was added, and substantially 11 parts by mass of IPDA was added, and the resultant mixture was allowed to react. After that, methyl ethyl ketone was removed by evaporation under reduced pressure, and then, 12 parts by mass of a silicone emulsion ("SLJ1320", manufactured by Wacker Asahikasei Silicone Co., Ltd., solid content: 60% by mass, hereinafter abbreviated as "QEm (3)") was added to obtain a urethane resin composition.

In the obtained urethane resin, the concentration of the anionic group was 0.13 mmol/g and the concentration of EO was 3.82 mmol/g.

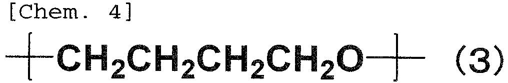

### [Example 4] ( not according to the invention)

A four-neck flask equipped with a stirrer, a reflux condenser tube, a thermometer, and a nitrogen blowing tube was charged, under a nitrogen flow, with 100 parts by mass of PTMG, 50 parts by mass of PC, 17 parts by mass of a random copolymer of ethylene oxide and propylene oxide (produced using ethylene glycol as an initiator, [EO/PO] = 75/25, number average molecular weight: 3,000, hereinafter abbreviated as "EOPO (3)"), 2 parts by mass of DMPA, and 136 parts by mass of MEK. The mixture was stirred until uniform. Then, 31 parts by mass of isophorone diisocyanate (hereinafter abbreviated as "IPDI") was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 1.5 parts by mass of triethylamine was added to neutralize a carboxyl group in the urethane polymer. After the neutralization, 476 parts by mass of ion-exchange water was added, and substantially 4 parts by mass of PZ was added, and the resultant mixture was allowed to react. After that, methyl ethyl ketone was removed by evaporation under reduced pressure, and then, 12 parts by mass of QEm (1) was added to obtain a urethane resin composition.

In the obtained urethane resin, the concentration of the anionic group was 0.07 mmol/g and the concentration of EO was 1.42 mmol/g.

### [Example 5] (not according to the invention)

A four-neck flask equipped with a stirrer, a reflux condenser tube, a thermometer, and a nitrogen blowing tube was charged, under a nitrogen flow, with 100 parts by mass of PTMG, 45 parts by mass of a random copolymer of ethylene oxide and tetramethylene oxide (produced using tetrahydrofuran as an initiator, [EO/TMO] = 50/50, number average molecular weight: 1,100, hereinafter abbreviated as "EOTMO (2)"), 3 parts by mass of DMPA, and 127 parts by mass of MEK. The mixture was stirred until uniform. Then, 46 parts by mass of HMDI was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 2.3 parts by mass of triethylamine was added to neutralize a carboxyl group in the urethane polymer. After the neutralization, 444 parts by mass of ion-exchange water was added, and substantially 10 parts by mass of IPDA was added, and the resultant mixture was allowed to react. After that, methyl ethyl ketone was removed by evaporation under reduced pressure, and then, 10 parts by mass of QEm (2) was added to obtain a urethane resin composition.

In the obtained urethane resin, the concentration of the anionic group was 0.11 mmol/g and the concentration of EO was 2.51 mmol/g.

### [Example 6] (not according to the invention)

A four-neck flask equipped with a stirrer, a reflux condenser tube, a thermometer, and a nitrogen blowing tube was charged, under a nitrogen flow, with 100 parts by mass of PTMG, 80 parts by mass of a random copolymer of ethylene oxide and tetramethylene oxide (produced using tetrahydrofuran as an initiator, [EO/TMO] = 50/50, number average molecular weight: 3,000, hereinafter abbreviated as ''EOTMO (3)"), 4.5 parts by mass of DMPA, and 174 parts by mass of MEK. The mixture was stirred until uniform. Then, 46 parts by mass of HMDI and 13 parts by mass of HDI were added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 3.4 parts by mass of triethylamine was added to neutralize a carboxyl group in the urethane polymer. After the neutralization, 611 parts by mass of ion-exchange water was added, and substantially, 14 parts by mass of IPDA was added, and the resultant mixture was allowed to react. After that, methyl ethyl ketone was removed by evaporation under reduced pressure, and then, 5.2 parts by mass of QEm (3) was added to obtain a urethane resin composition.

In the obtained urethane resin, the concentration of the anionic group was 0.13 mmol/g and the concentration of EO was 3.47 mmol/g.

### [Comparative Example 1]

A four-neck flask equipped with a stirrer, a reflux condenser tube, a thermometer, and a nitrogen blowing tube was charged, under a nitrogen flow, with 100 parts by mass of PTMG, 35 parts by mass of polyethylene glycol (number average molecular weight: 1,000, hereinafter abbreviated as "PEG") 7 parts by mass of DMPA, and 126 parts by mass of MEK. The mixture was stirred until uniform. Then, 35 parts by mass of HDI was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 5.3 parts by mass of triethylamine was added to neutralize a carboxyl group in the urethane polymer. After the neutralization, 439 parts by mass of ion-exchange water was added, and substantially, 12 parts by mass of IPDA was added, and the resultant mixture was allowed to react. After that, methyl ethyl ketone was removed by evaporation under reduced pressure to obtain a urethane resin composition.

In the obtained urethane resin, the concentration of the anionic group was 0.25 mmol/g and the concentration of EO was 1.92 mmol/g.

### [Comparative Example 2]

A four-neck flask equipped with a stirrer, a reflux condenser tube, a thermometer, and a nitrogen blowing tube was charged, under a nitrogen flow, with 100 parts by mass of PTMG, 5 parts by mass of DMPA, and 90 parts by mass of MEK. The mixture was stirred until uniform. Then, 22 parts by mass of HDI was added, and subsequently, 0.1 part by mass of dibutyltin dilaurate was added. The resultant mixture was allowed to react at 70°C for approximately 4 hours, whereby a methyl ethyl ketone solution of a urethane prepolymer having an isocyanate group was obtained.

Substantially, 3.8 parts by mass of triethylamine was added to neutralize a carboxyl group in the urethane polymer. After the neutralization, 314 parts by mass of ion-exchange water was added, and substantially, 7.4 parts by mass of IPDA was added, and the resultant mixture was allowed to react. After that, methyl ethyl ketone was removed by evaporation under reduced pressure to obtain a urethane resin composition.

In the obtained urethane resin, the concentration of the anionic group was 0.28 mmol/g and the concentration of EO was 0 mmol/g.

### [Comparative Example 3]

The same chemical composition as that in Example 1 was employed and the concentration of the anionic group and the concentration of EO in the urethane resin were designed to be 0.12 mmol/g and 0 mmol/g, respectively, and then synthesis was attempted. However, emulsification failed to occur. Hence, the following evaluations were not made, and were accordingly marked with "-".

### [Comparative Example 4]

The same chemical composition as that in Example 1 was employed and the concentration of the anionic group and the concentration of EO in the urethane resin were designed to be 0.12 mmol/g and 10 mmol/g, respectively, and then synthesis was attempted. However, emulsification failed to occur. Hence, the following evaluations were not made, and were accordingly marked with "-".

### [Method for Measuring Number Average Molecular Weight and Weight-Average Molecular Weight]

The number average molecular weight and weight-average molecular weight of each of the polyol and others used in the synthesis examples are values obtained by measuring by gel permeation chromatography (GPC) under the following conditions.

### Measurement Device: High performance GPC ("HLC-8220GPC", manufactured by Tosoh Corporation)

Column: The following columns manufactured by Tosoh Corporation were connected in series and used.
   "TSKgel G5000" (7.8 mm I.D. × 30 cm) × 1
   "TSKgel G4000" (7.8 mm I.D. × 30 cm) × 1
   "TSKgel G3000" (7.8 mm I.D. × 30 cm) × 1
   "TSKgel G2000" (7.8 mm I.D. × 30 cm) × 1
Detector: RI (differential refractometer)
Column Temperature: 40°C
Eluent: tetrahydrofuran (THF)
Flow Rate: 1.0 mL/minute
Injection Amount: 100 µL (a tetrahydrofuran solution having a sample concentration of 0.4% by mass)
Standard sample: The following types of standard polystyrene were used to produce a calibration curve.

### (Standard Polystyrene)

"TSKgel standard polystyrene A-500", manufactured by Tosoh Corporation
"TSKgel standard polystyrene A-1000", manufactured by Tosoh Corporation
"TSKgel standard polystyrene A-2500", manufactured by Tosoh Corporation
"TSKgel standard polystyrene A-5000", manufactured by Tosoh Corporation
"TSKgel standard polystyrene F-1", manufactured by Tosoh Corporation
"TSKgel standard polystyrene F-2", manufactured by Tosoh Corporation
"TSKgel standard polystyrene F-4", manufactured by Tosoh Corporation
"TSKgel standard polystyrene F-10", manufactured by Tosoh Corporation
"TSKgel standard polystyrene F-20", manufactured by Tosoh Corporation
"TSKgel standard polystyrene F-40", manufactured by Tosoh Corporation
"TSKgel standard polystyrene F-80", manufactured by Tosoh Corporation
"TSKgel standard polystyrene F-128", manufactured by Tosoh Corporation
"TSKgel standard polystyrene F-288", manufactured by Tosoh Corporation
"TSKgel standard polystyrene F-550", manufactured by Tosoh Corporation

### [Method for Evaluating Water Dispersion Stability]

Each of the urethane resin compositions obtained in Examples and Comparative Examples was left to stand at 5°C for 1 week, and then a solution state thereof was observed and evaluated as follows.
"A": No problem in flowability
"B": Low flowability
"C": No flowability

### [Evaluation of Moisture Permeability]

A 20-µm-thick film was produced using each of the urethane resin compositions obtained in Examples and Comparative Examples, and the moisture permeability (g/m²/24h) of the film was measured in accordance with the A-1 method (calcium chloride method) defined in JIS L1099:2012, and evaluated as follows.
"A": 3,000 or more
"B": 2,000 or more and less than 3,000
"C": less than 2,000

### [Production of Synthetic Leather]

First, 100 parts by mass of each of the urethane resin compositions obtained in Examples and Comparative Examples, 10 parts by mass of a black pigment ("DILAC HS-9530", manufactured by DIC Corporation), and 1 part by mass of a thickener ("HYDRAN ASSISTER T10", manufactured by DIC Corporation) were mixed, and the resultant liquid mixture was applied onto a release paper liner ("DN-TP-155T", manufactured by Ajinomoto Co., Inc.) so as to achieve a film thickness of 20 µm after drying, and dried at 70°C for 2 minutes, then dried at 120°C for 2 minutes to obtain a skin layer.

Next, 100 parts by mass of an aqueous urethane adhesive ("HYDRAN WLA-465", manufactured by DIC Corporation), 1 part by mass of a thickener ("HYDRAN ASSISTER T10" manufactured by DIC Corporation), and 5 parts by mass of a cross-linking agent ("HYDRAN ASSISTER C5", manufactured by DIC Corporation) were mixed, and the resultant liquid mixture was applied onto the skin layer so as to achieve a film thickness of 30 µm after drying, and dried at 70°C for 3 minutes.

Immediately after the drying, a T/R raised fabric was laminated, and the resultant laminate was heat-treated at 120°C for 2 minutes, and aged at 50°C for 2 days, and then the release paper liner was peeled off to obtain a synthetic leather.

### [Method for Evaluating Hydrolysis Resistance]

Each of the synthetic leathers obtained in Examples and Comparative Examples was left to stand under the conditions of a temperature of 70°C and a humidity of 95% for 5 weeks. After that, the appearance of the synthetic leather was observed and also the synthetic leather was inspected by finger touching, and evaluated as follows.
"A": No abnormality was observed in terms of appearance and by finger touching.
"B": A change in luster was observed in the appearance.
"C": A change in luster was observed in the appearance, and the synthetic leather was sticky.

### [Method for Evaluating Wear Resistance]

Each of the synthetic leathers obtained in Examples and Comparative Examples was subjected to a Taber abrasion test (JISL 1096:2010, abrasion wheel: H-18, load: 500 g, number of revolutions: 70 rpm, number of times of test: 1,000 times). Then, the surface of the synthetic leather was observed, and evaluated as follows.
"A": No tear
"B": Small tear
"C": Large tear to the extent that the base material (the raised fabric) was exposed

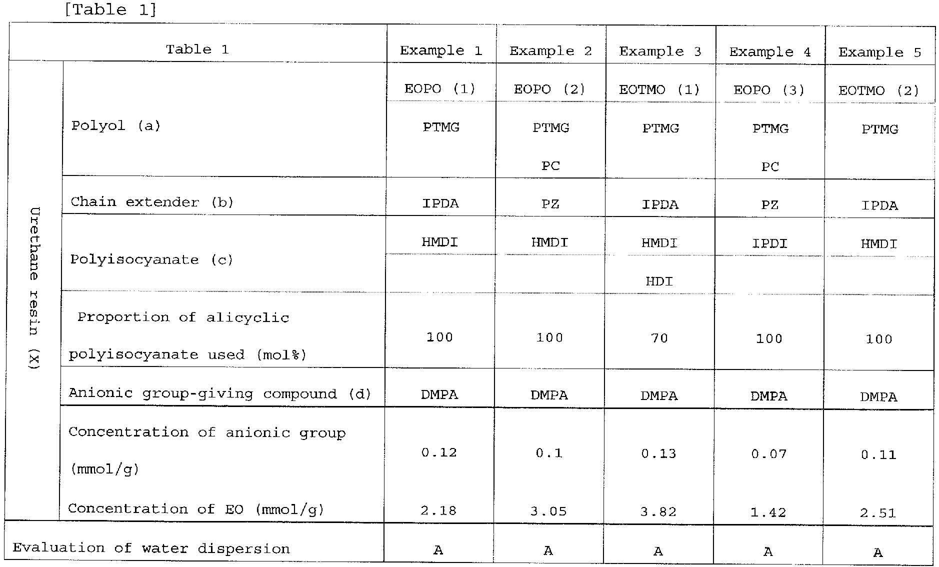

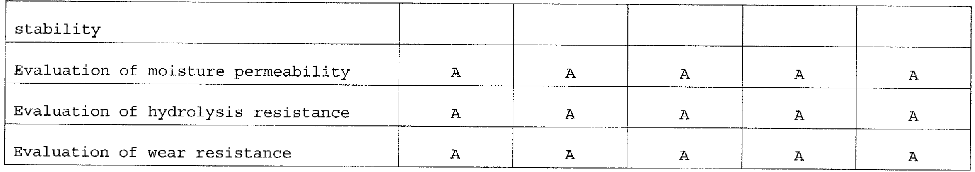

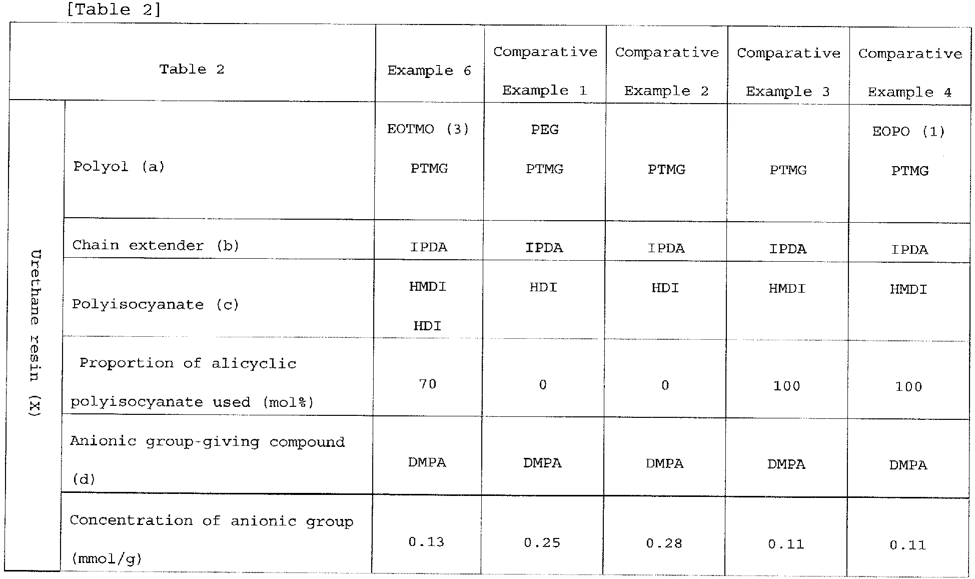

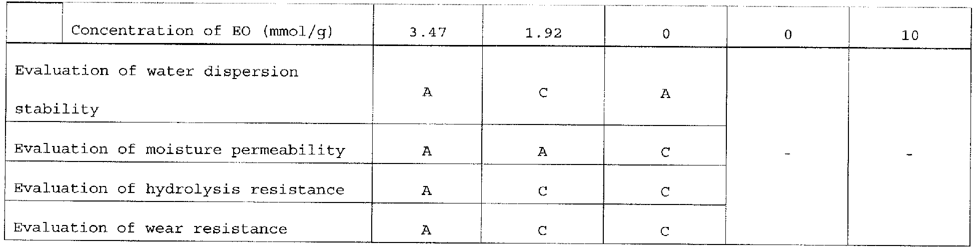

The urethane resin compositions obtained in Examples 1 to 6 according to the present invention were excellent in the water dispersion stability, moisture permeability, hydrolysis resistance, and wear resistance of the urethane resins.

In contrast, in Comparative Example 1, in which the anionic concentration of the urethane resin (X) exceeded the range specified in the present invention, the water dispersion stability, hydrolysis resistance, and wear resistance of the urethane resin were poor.

In Comparative Example 2, in which the anionic concentration of the urethane resin (X) exceeded the range specified in the present invention and EO was not introduced, the moisture permeability, hydrolysis resistance, and wear resistance of the urethane resin were poor.

In Comparative Example 3, in which EO was not introduced, emulsification failed to occur.

In Comparative Example 4, in which the amount of EO introduced exceeded the range specified in the present invention, emulsification failed to occur.

## Claims

1. A urethane resin composition, comprising:
a urethane resin (X) having an anionic group;
water (Y); and
a silicone compound (Z),
the urethane resin (X) having a concentration of the anionic group of 0.2 mmol/g or less, and having a concentration of a structure represented by formula (1) below of 1 to 6 mmol/g 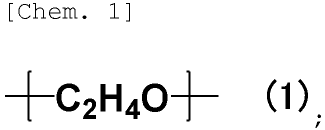
wherein a silicone emulsion is used as the silicone compound (Z) and the amount of the silicone compound (Z) in terms of solid contents used is within the range of 0.1 to 10 parts by mass with respect to 100 parts by mass of the urethane resin (X) in terms of solid contents.

2. The urethane resin composition according to claim 1, wherein the structure, represented by formula (1), of the urethane resin (X) is derived from polyoxyethylene polyoxypropylene glycol (a1-1) and/or polyoxyethylene polyoxytetramethylene glycol (a1-2).

3. The urethane resin composition according to claim 2, wherein the polyoxyethylene polyoxypropylene glycol (a1-1) and the polyoxyethylene polyoxytetramethylene glycol (a1-2) are each a random copolymer.

4. The urethane resin composition according to any one of claims 1 to 3, wherein
the urethane resin (X) is produced using polyisocyanate (c) as a raw material, and
a proportion of alicyclic polyisocyanate used in the polyisocyanate (c) is 40 mol% or more.

5. A coating formed from the urethane resin composition according to any one of claims 1 to 4.

6. A synthetic leather, including the coating according to claim 5 as a skin layer.

## Patentansprüche

1. Urethanharzzusammensetzung, umfassend:
ein Urethanharz (X) mit einer anionischen Gruppe;
Wasser (Y); und
eine Silikonverbindung (Z),
wobei das Urethanharz (X) eine Konzentration der anionischen Gruppe von 0,2 mmol/g oder weniger aufweist und eine Konzentration einer Struktur, die durch die nachstehende Formel (1) dargestellt wird, von 1 bis 6 mmol/g aufweist 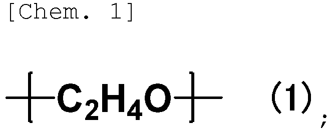
wobei als Silikonverbindung (Z) eine Silikonemulsion verwendet wird und die Menge der Silikonverbindung (Z), bezogen auf den Feststoffgehalt, im Bereich von 0,1 bis 10 Masseteile, bezogen auf 100 Masseteile des Urethanharzes (X), bezogen auf den Feststoffgehalt, liegt.

2. Urethanharzzusammensetzung nach Anspruch 1, wobei die durch die Formel (1) dargestellte Struktur des Urethanharzes (X) von Polyoxyethylenpolyoxypropylenglykol (a1-1) und/oder Polyoxyethylenpolyoxytetramethylenglykol (a1-2) abgeleitet ist.

3. Urethanharzzusammensetzung nach Anspruch 2, wobei das Polyoxyethylenpolyoxypropylenglykol (a1-1) und das Polyoxyethylenpolyoxytetramethylenglykol (a1-2) jeweils ein statistisches Copolymer sind.

4. Urethanharzzusammensetzung nach einem der Ansprüche 1 bis 3, wobei
das Urethanharz (X) unter Verwendung von Polyisocyanat (c) als Rohmaterial hergestellt ist, und
ein Anteil an alicyclischem Polyisocyanat, der in dem Polyisocyanat (c) verwendet wird, 40 Mol-% oder mehr beträgt.

5. Beschichtung, die aus der Urethanharzzusammensetzung gemäß einem der Ansprüche 1 bis 4 gebildet ist.

6. Kunstleder, das die Beschichtung gemäß Anspruch 5 als Hautschicht enthält.

## Revendications

1. Composition de résine uréthane, comprenant :
une résine uréthane (X) ayant un groupe anionique ;
de l'eau (Y) ; et
un composé de silicone (Z),
la résine uréthane (X) ayant une concentration en groupe anionique de 0,2 mmol/g ou moins, et ayant une concentration en structure représentée par la formule (1) ci-dessous de 1 à 6 mmol/g 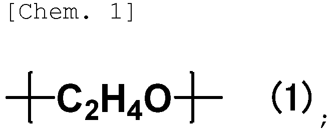
dans laquelle une émulsion de silicone est utilisée comme composé de silicone (Z) et la quantité du composé de silicone (Z) en termes de teneur en solides utilisée est comprise dans la plage de 0,1 à 10 parties en masse pour 100 parties en masse de la résine uréthane (X) en termes de teneur en solides.

2. Composition de résine uréthane selon la revendication 1, dans laquelle la structure, représentée par la formule (1), de la résine uréthane (X) est dérivée du polyoxyéthylène polyoxypropylène glycol (a1-1) et/ou du polyoxyéthylène polyoxytétraméthylène glycol (a1-2).

3. Composition de résine uréthane selon la revendication 2, dans laquelle le polyoxyéthylène polyoxypropylène glycol (a1-1) et le polyoxyéthylène polyoxytétraméthylène glycol (a1-2) sont chacun un copolymère aléatoire.

4. Composition de résine uréthane selon l'une quelconque des revendications 1 à 3, dans laquelle
la résine uréthane (X) est produite à partir de polyisocyanate (c) comme matière première, et
la proportion de polyisocyanate alicyclique utilisée dans le polyisocyanate (c) est de 40 % en moles ou plus.

5. Revêtement formé à partir de la composition de résine uréthane selon l'une quelconque des revendications 1 à 4.

6. Cuir synthétique comprenant le revêtement selon la revendication 5 en tant que couche superficielle.
